Europäisches Patentamt

European Patent Office

Office européen des brevets

(11) Veröffentlichungsnummer: **0 301 237 B1**

(12) **EUROPÄISCHE PATENTSCHRIFT**

(45) Veröffentlichungstag der Patentschrift: **30.10.91**

(51) Int. Cl.⁵: **B01J 19/30,** C02F 3/10

(21) Anmeldenummer: **88109960.0**

(22) Anmeldetag: **23.06.88**

(54) **Füllkörper.**

(30) Priorität: **18.07.87 DE 3723804**

(43) Veröffentlichungstag der Anmeldung:
**01.02.89 Patentblatt 89/05**

(45) Bekanntmachung des Hinweises auf die
Patenterteilung:
**30.10.91 Patentblatt 91/44**

(84) Benannte Vertragsstaaten:
**AT BE DE FR GB IT NL**

(56) Entgegenhaltungen:
**DE-B- 1 051 814**
**FR-A- 2 185 437**
**FR-A- 2 263 809**

(73) Patentinhaber: **Norddeutsche Seekabelwerke**
**Aktiengesellschaft**
**Kabelstrasse**
**W-2890 Nordenham(DE)**

(72) Erfinder: **Basse, Hartwig**
**Wartfelder Strasse 60**
**W-2890 Nordenham(DE)**
Erfinder: **Wittek, Jürgen, Dr. Dipl.-Chem.**
**Im Sonnenwinkel 3**
**W-2890 Nordenham(DE)**

(74) Vertreter: **Möller, Friedrich, Dipl.-Ing. et al**
**Meissner, Bolte & Partner Patentanwälte Hol-**
**lerallee 73**
**W-2800 Bremen 1(DE)**

## Beschreibung

Die Erfindung betrifft einen Füllkörper gemäß dem Oberbegriff des Anspruchs 1.

Füllkörper der hier angesprochenen Art finden hauptsächlich dort Anwendung, wo es um die Verbesserung des Stoffaustausches zwischen Gasströmen und Flüssigkeit geht, also beispielsweise zur Absorption, Desorption, Destillation, Rektifikation, Extraktion, Befeuchtung, Kondensation u.ä. Besonders bewährt haben sich derartige Füllkörper im Bereich der Abwassertechnik, wo sie sowohl in regellosen Schüttungen als auch in geordneten Strangpaketen zum Einsatz kommen und insbesondere bei der biologischen Abgasreinigung als Bewuchsflächen für "biologischen Rasen" dienen.

Aus der FR-A-2 185 437 ist ein Füllkörper mit einem zylindrischen Körpermantel und darin angeordneten vollflächigen Leitflächen bekannt. Die Leitflächen teilen das Innere des Körpermantels in mehrere (Teil-)Räume auf. Die Mantelfläche des Körpermantels ist mit relativ kleinen Öffnungen versehen.

Die geschlossenen Leitflächen im Inneren des Körpermantels verleihen dem bekannten Füllkörper zwar eine recht gute Stabilität und eine große Bewuchsfläche, doch führen die nur relativ kleinen Öffnungen im Körpermantel zu Strömungsverhältnissen im Füllkörper, die denen nebeneinanderliegender Rohrstränge entsprechen. Die Folge sind schlechte hydraulische Eigenschaften, nämlich ein schlechter Gas-/Flüssigkeitsdurchgang und ein schlechter Schlammaustrag beim bekannten Füllkörper.

Hiervon ausgehend liegt der Erfindung die Aufgabe zugrunde, einen einfach herzustellenden und stabilen Füllkörper mit einem guten Stoffübergang zu schaffen, der einen guten Gas-/Flüssigkeitsdurchgang sowie einen zuverlässigen Schlammaustrag gewährleistet.

Der Füllkörper zur Lösung dieser Aufgabe weist die Merkmale des Anspruchs 1 auf. Durch den netzförmigen Körpermantel in Verbindung mit den das Innere desselben unterteilenden Leitflächen wird eine gute Belüftung des Füllkörpers sowohl in Quer- als auch in Längsrichtung ermöglicht. Des weiteren entstehen im Füllkörper definierte Strömungswege, die einen zuverlässigen Schlammaustrag gewährleisten. Die das Innere der Körpermantels unterteilenden durchgehenden Leitflächen machen den erfindungsgemäßen Füllkörper trotz des netzförmigen Körpermantels ausreichend stabil, wobei aufgrund der geschlossenen Ausbildung der Leitflächen trotz des netzförmigen Körpermantels der Stoffübergang vergleichsweise gut ist. Außerdem ermöglicht die netzförmige Gestaltung des Körpermantels ein allseitiges Eindringen des zu behandelnden Mediums in denselben, indem die Netzstränge des Körpermantels überwiegend als Abstandshalter zu benachbarten Füllkörpern dienen. Schließlich gewährleistet die Verbindung der zum Körpermantel gerichteten Ränder der Leitflächen mit jeweils einem in Längsrichtung des Körpermantels verlaufenden Netzstrang eine stabile Anbindung der Leitflächen mit dem Körpermantel, indem trotz der Netzstruktur des Körpermantels eine durchgehende, linienförmige Verbindung zwischen den jeweiligen Rändern der Leitflächen einerseits und dem Körpermantel andererseits geschaffen wird.

Vorzugsweise sind die Leitflächen sternförmig im Inneren des Körpermantels angeordnet. Es entstehen so relativ große Bewuchs- bzw. Abtropfflächen, die Strömungskanäle mit kreissegmentartiger Gestalt im Körpermantel bilden. Je nach Anzahl der Leitflächen können drei-, vier-, aber auch mehrflügelige Sterne im Inneren des Körpermantels gebildet werden. Gegebenenfalls können die sternförmig angeordneten Leitflächen schraubenförmig gewendelt im Körpermantel verlaufen, wodurch eine ausreichende Bewegung des zu behandelnden Mediums in den Füllkörpern gewährleistet wird. Zusätzlich oder alternativ können die Leitflächen auch noch profiliert sein, beispielsweise gewellt. Auch ist es denkbar, die Leitflächen mit Durchbrüchen zu versehen.

Zweckmäßigerweise bestehen die erfindungsgemäßen Füllkörper aus Kunststoff, nämlich thermoplastischem Kunststoff, wodurch eine fortlaufende Extrusion eines Füllkörperrohrs in einem Arbeitsgang wirtschaftlich möglich ist. Durch Abtrennen einzelner Abschnitte von diesem Rohr lassen sich dann in ebenso einfacher Weise die einzelnen Füllkörper bilden. Im übrigen wird die einfache Herstellung der erfindungsgemäßen Füllkörper, nämlich durch Extrusion, durch die besondere Ausgestaltung und Anordnung der durchgehenden Leitflächen im Körpermantel begünstigt.

Ausführungsbeispiele des erfindungsgemäßen Füllkörpers werden nachfolgend anhand der Zeichnungen näher erläutert.

Es zeigen:

Fig. 1    eine perspektivische Darstellung eines Füllkörpers mit drei sternförmig zueinander angeordneten Leitflächen im Körpermantel,

Fig. 2    eine Draufsicht auf den Füllkörper gemäß der Fig. 1,

Fig. 3    eine Draufsicht gemäß der Fig. 2 auf ein zweites Ausführungsbeispiel des Füllkörpers mit drei sternförmig angeordneten, gewellten Leitflächen, und

Fig. 4    eine Draufsicht gemäß der Fig. 2 und 3 auf ein weiteres Ausführungsbeispiel des Füllkörpers mit vier im rechten Winkel zueinander verlaufenden (glatten) Leitflächen.

Die hier gezeigten Ausführungsbeispiele zeigen einen Füllkörper 10, der sich vorzugsweise für eine (unregelmäßige) Füllkörperschüttung zur biologischen Abwasserreinigung eignet. Die gezeigten Füllkörper 10 verfügen jeweils über einen zylindrischen Körpermantel 11 mit einer Netzstruktur. Demzufolge setzt sich der Körpermantel 11 aus mehreren mit Abstand parallel zueinander in Längsrichtung des Füllkörpers 10 verlaufenden Netzsträngen 12 und rechtwinklig dazu in Querrichtung zur Längserstreckung des Füllkörpers 10 parallel mit Abstand verlaufenden Ringsträngen 13 zusammen. Die Netzstränge 12 und die Ringstränge 13 sind an ihren Knotenpunkten miteinander verschmolzen und weisen etwa den gleichen Abstand zueinander auf zur Bildung etwa quadratischer Netzöffnungen 14. Die Länge der Netzstränge 12 ist derart gewählt, daß sie gegenüber dem oberen bzw. unteren Ringstrang 13 des Füllkörpers 10 hervorragen zur Bildung von Abtropfspitzen 15.

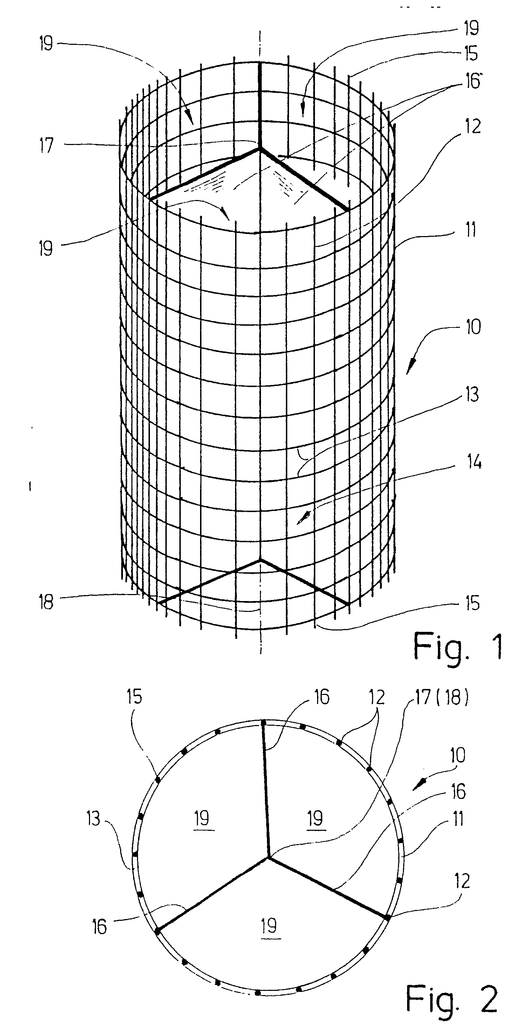

Beim Ausführungsbeispiel der Fig. 1 und 2 sind im netzförmigen Körpermantel 11 drei sternförmig zueinander verlaufende Leitflächen 16 angeordnet. Die Leitflächen 16 sind längs einer Verbindungslinie 17 miteinander verbunden, und zwar derart, daß die Verbindungslinie 17 mit der Längsmittelachse 18 des Füllkörpers 10 zusammenfällt. Die Relativanordnung der drei sternförmigen Leitflächen 16 ist hier symmetrisch getroffen, so daß jeweils zwei Leitflächen 16 einen Winkel von etwa 120° einschließen. Es werden dadurch im Körpermantel 11 des Füllkörpers 10 drei etwa gleich große Teilräume 19 gebildet, die, begrenzt durch den jeweiligen Abschnitt des Körpermantels 11, eine Grundfläche aufweisen, die etwa einem Drittel-Kreisausschnitt entspricht. Die der Verbindungslinie 17 gegenüberliegenden (äußeren) Ränder der Leitflächen 16 sind in besonderer Weise mit dem Körpermantel 11 verbunden, nämlich mit jeweils einem der längsgerichteten Längsstränge 12.

Im vorliegenden Ausführungsbeispiel sind die gleich großen, rechteckigen Leitflächen 16 eben und vollflächig ausgebildet und verlaufen über die gesamte Länge der Netzstränge 12, also längs des gesamten Füllkörpers 10.

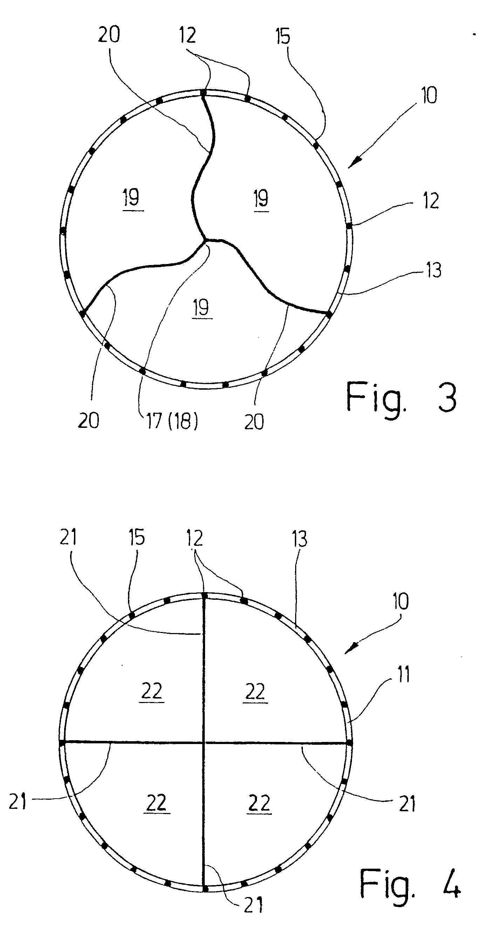

Im Ausführungsbeispiel der Fig. 3 sind im netzförmigen Körpermantel 11 ebenfalls drei gleich große, durchgehende Leitflächen 20 sternförmig angeordnet. Die Besonderheit dieser Leitflächen 20 besteht darin, daß sie gewellt ausgebildet sind, vorzugsweise über zwei entgegengesetzte Halbwellen einer Sinusschwingung verfügen. Darüber hinaus sind hiervon abweichende Wellenformen für die Leitflächen 20 denkbar, insbesondere mehrere hintereinanderliegende Wellenlinien für jede Leitfläche 20.

Schließlich zeigt das Ausführungsbeispiel der Fig. 4 einen Füllkörper 10 mit vier Leitflächen 21, die in zwei unterschiedlichen, rechtwinklig zueinander verlaufenden Ebenen angeordnet sind, so daß zwei Leitflächen 21 nebeneinander in der gleichen Ebene jeweils liegen. Diese Leitflächen 21 bilden im Körpermantel 11 vier gleich große Teilräume 22 mit jeweils einer viertel-kreisförmigen Grundfläche. Auch diese Leitflächen 21 können ggf. gewellt oder profiliert ausgebildet sein.

Darüber hinaus ist es denkbar, noch eine größere Anzahl von Leitflächen im Füllkörper unterzubringen. Ebenso können die Leitflächen längs des Füllkörpers 10 gewunden verlaufen, vorzugsweise schraubenlinienförmig. Des weiteren ist es denkbar, auch die Leitflächen mit Durchbrüchen zu versehen.

Die vorstehend beschriebenen Füllkörper 10 sind einstückig aus Kunststoff, vorzugsweise thermoplastischem Kunststoff, hergestellt, und zwar insbesondere fortlaufend durch Extrusion. Von dem so entstehenden endlosen Füllkörperrohr können so die Füllkörper 10 in der gewünschten Länge in einfacher Weise abgelängt werden. Dieses Ablängen geschieht vorzugsweise quer zur Längsrichtung des Füllkörperrohrs zwischen zwei Ringsträngen 13, wodurch dann zwangsläufig die Abtropfspitzen 15 aus gegenüber den außenliegenden Ringsträngen 13 vorstehenden Abschnitten der Netzstränge 12 gebildet werden. Je nach Länge der Füllkörper 10 können diese in einer regellosen Füllkörperschüttung (kurze Füllkörper 10) oder in einem geordneten Füllkörperpaket (lange Füllkörper 10) angeordnet werden.

## Patentansprüche

1. Füllkörper mit einem vorzugsweise zylindrischen Körpermantel (11), und mit im Körpermantel (11) angeordneten vollflächigen Leitflächen (16; 20; 21), die das Innere des Körpermantels (11) in mehrere etwa gleich große (Teil-)Räume (19; 22) unterteilen und in einer gemeinsamen, etwa auf einer Längsmittelachse (18) des Körpermantels (11) liegende Verbindungslinie (17) verbunden sind, **dadurch gekennzeichnet,** daß der Körpermantel (11) netzartig ausgebildet ist und die der Verbindungslinie (17) gegenüberliegenden (längsverlaufenden) Ränder der Leitflächen (16; 20; 21) mit jeweils einem in Längsrichtung des Körpermantels (11) verlaufenden Netzstrang (12) verbunden sind.

2. Füllkörper nach Anspruch 1, dadurch gekennzeichnet, daß die Leitflächen (16; 20; 21) in Längsrichtung des Körpermantels (11) durchgehend verlaufen.

3. Füllkörper nach Anspruch 1 oder 2, dadurch gekennzeichnet, daß die Leitflächen (16; 20; 21) profiliert sind, vorzugsweise in Querrichtung des Körpermantels (11) gewellt verlaufen.

4. Füllkörper nach einem oder mehreren der Ansprüche 1 bis 3, dadurch gekennzeichnet, daß die miteinander verbundenen Leitflächen (16; 20; 21) sternförmig im Körpermantel (11) angeordnet sind.

5. Füllkörper nach Anspruch 4, dadurch gekennzeichnet, daß die sternförmigen Leitflächen (16; 20; 21) im Körpermantel (11) schraubenförmig gewendelt verlaufen.

6. Füllkörper nach Anspruch 1 sowie einem oder mehreren der weiteren Ansprüche, dadurch gekennzeichnet, daß die in Längsrichtung des Körpermantels (11) verlaufenden Netzstränge (12) mit zu denselben senkrecht verlaufenden Ringsträngen (13) verbunden sind zur Bildung etwa quadratischer Netzöffnungen (14).

## Claims

1. Packing body having a preferably cylindrical body casing (11) and having guide surfaces (16; 20; 21) with continuous surfaces which are disposed inside the body casing (11) and which subdivide the interior of the body casing (11) into several approximately equally large (sub)chambers (19; 22) and are joined in a common connecting line (17) situated approximately on a longitudinal central axis (18) of the body casing (11), characterised in that the body casing (11) is of grid-type construction and the (longitudinally extending) edges of the guide surfaces (16; 20; 21) situated opposite the connecting line (17) are in each case joined to a grid strand (12) extending in the longitudinal direction of the body casing (11).

2. Packing body according to Claim 1, characterised in that the guide surfaces (16; 20; 21) extend continuously in the longitudinal direction of the body casing (11).

3. Packing body according to Claim 1 or 2, characterised in that the guide surfaces (16; 20; 21) are profiled and preferably extend in corrugated fashion in the transverse direction of the body casing (11).

4. Packing body according to one or more of Claims 1 to 3, characterised in that the mutually joined guide surfaces (16; 20; 21) are arranged radially in the body casing (11).

5. Packing body according to Claim 4, characterised in that the radial guide surfaces (16; 20; 21) extend in helically coiled fashion in the body casing (11).

6. Packing body according to Claim 1 and also one or more of the further claims, characterised in that the grid strands (12) extending in the longitudinal direction of the body casing (11) are joined to the same perpendicularly extending annular strands (13) to form approximately square grid openings (14).

## Revendications

1. Corps de remplissage comprenant une enveloppe de corps (11) de préférence cylindrique et des surfaces de guidage (16, 20, 21) à surface pleine qui sont agencées dans le corps de remplissage (11), qui divisent l'intérieur du corps de remplissage (11) en plusieurs espaces (partiels) (19, 22) de grandeurs approximativement égales et qui sont raccordées à une ligne de raccordement (17) commune située approximativement sur un axe longitudinal médian (18) du corps de remplissage (11), caractérisé en ce que le corps de remplissage (11) est réalisé en un genre de réseau et en ce que les bords (qui s'étendent longitudinalement) des surfaces de guidage (16, 20, 21) opposés à la ligne de raccordement (17) sont raccordés chaque fois à un fil de réseau (12) qui s'étend dans la direction longitudinale de l'enveloppe de corps (11).

2. Corps de remplissage suivant la revendication 1, caractérisé en ce que les surfaces de guidage (16, 20, 21) s'étendent de façon continue dans la direction longitudinale de l'enveloppe de corps (11).

3. Corps de remplissage suivant l'une ou l'autre des revendications 1 et 2, caractérisé en ce que les surfaces de guidage (16, 20, 21) sont profilées, de préférence s'étendent de façon ondulée dans une direction transversale de l'enveloppe de corps (11).

4. Corps de remplissage suivant l'une quelconque des revendications 1 à 3, caractérisé en ce que les surfaces de guidage (16, 20, 21) raccordées entre elles sont agencées en étoile dans l'enveloppe de corps (11).

5. Corps de remplissage suivant la revendication 4, caractérisé en ce que les surfaces de guidage en étoile (16, 20, 21) s'étendent de façon boudinée en hélice dans l'enveloppe de corps (11).

6. Corps de remplissage suivant la revendication 1, ainsi que suivant une ou plusieurs autres revendications, caractérisé en ce que les fils de réseau (12) qui s'étendent dans la direction longitudinale de l'enveloppe de corps (11) sont raccordés aux fils annulaires (13), qui s'étendent perpendiculairement aux précédents, pour former des ouvertures de réseau (14) approximativement carrées.

Fig. 1

Fig. 2

Fig. 3

Fig. 4

7